# EUROPEAN PATENT APPLICATION

(11) **EP 3 958 650 A1**
(43) Date of publication of application: **23.02.2022**
(21) Application number: 20191706.9
(22) Date of filing: 19.08.2020
(51) Int. Cl.: H05B 3/42

(54) **ELECTRICAL HEATING UNIT FOR EXHAUST GAS SYSTEM AND METHOD FOR ITS MANUFACTURE**

(71) Applicant: Johnson Matthey Public Limited Company, London EC4A 4AB (GB)
(72) Inventor: O'CONNELL, Timothy, Royston, Hertfordshire SG8 5HE (GB); BENNETT, Christopher John, Royston, Hertfordshire SG8 5HE (GB); EDGAR, Jonathan, Billingham, Cleveland TS23 1LB (GB); FONTE, Carlos, Royston, Hertfordshire SG8 5HE (GB)
(74) Representative: Lenden, Philip

(57) **Abstract**

A method for the manufacture of an electrical heating unit for use in an exhaust gas system and the use of an electrical heating unit obtainable by this method are described. The method comprises forming the electrical heating unit as a single piece by additive layer manufacturing. An exhaust gas system comprising the electrical heating unit and a downstream catalyst article is also described.

## Description

The present invention relates to an electrical heating unit for heating an exhaust gas to a suitable temperature for treatment in an exhaust system. In particular, the invention relates to an additive layer manufactured heater and method for the manufacture thereof.

It is known that catalytic articles in exhaust gas treatment systems, such as automobile exhausts, have optimum operating temperatures. Consequently, at a cold start the exhaust gases may be supplied to a catalyst article at a temperature below that at which it might be catalytically treated. It is therefore desirable to take steps to ensure that these lower temperature gases at cold start can be readily treated and to avoid the slip of untreated gaseous components.

One approach to ensuring that the gases are suitably treated is to supplement that heat in the system electrically. This ensures that the gases reach a treatable temperature more quickly, minimising slip. Joule heating is used in consumer and industrial applications to heat gas or water (usually). Electrical power is supplied to a suitable conductor and due to the resistance to flow of electrical current, thermal energy is generated which can heat the surrounding medium.

Joule heating for the treatment of exhaust gases is known in the automobile field. Specifically, foil-based designs are marketed by Emitec and related companies for automotive substrates. This substrate has been available commercially for at least 20 years.

WO1989010470A1 discloses metallic catalyst supports which can be heated directly by electricity. The catalyst support (80) can be heated shortly after a motor vehicle is started and hence reaches the required operating temperature for the catalytic reaction more rapidly. The exhaust gas emission is thus already reduced during the starting phase of the motor vehicle.

EP0603227B1 discloses a honeycombed body (90), in particular an electrically heatable catalytic converter for motor vehicles composed of at least partially structured sheet metal layers (97) that form a plurality of flow channels (98) for a fluid. The body has an electrically insulating intermediate layer (91, 92, 93, 94) composed of at least two sheet metal layers (91, 93) mechanically cramped to each other but electrically insulated from each other by an insulating layer (95). Because of the cramping (93), the electrically insulating intermediate layer (91, 92, 93, 94) can also be subjected to mechanical tensile loads. Thus the disclosed honeycombed bodies are mechanically robust, in particular when subjected to alternating thermal stresses, and can be produced by the usual manufacturing process. These honeycombed bodies are preferably used as electrically heatable catalytic converters for motor vehicles.

DE19537131A1 discloses an electrically heatable honeycomb element (1) for the catalytic conversion of gases, in particular exhaust gases from an internal combustion engine. The element has a plurality of channels (4) which can be permeated by a fluid and is electrically divided up along its cross-section and/or axial extension, in particular meandering and/or helical. At least two approximately half-shell current distributing structures (6, 7) are provided on the outer jacket surface (5) and are completely isolated by an annular gap from a jacket pipe (20), each current distribution structure (6, 7) having at least one collar (8) extending radially outwards or inwards around the circumference. This design prevents deformation of the current distribution structures (6, 7) at high operating loads.

WO1994017290A1 discloses an electrically heated catalytic converter with a housing which contains at least one honeycomb body arrangement (10) through which exhaust fumes from an internal combustion engine may flow in one direction. The honeycomb arrangement (10) is electroconductive and electrically heatable in at least partial areas and has a catalytically active coating on at least some partial areas. The honeycomb body arrangement (10) is subdivided by slots (16) and/or poorly electroconductive areas, so that at least two successive electroconductive partial areas (11, 13, 15) with different axial lengths (LH1, LH2, LH3) and/or different electric resistances result in the direction of flow. This design is more easily adaptable to different diameters and electric powers, while retaining a good mechanical resistance. It also allows a standardization of structural shapes for totally different marginal conditions in order to minimize the emission of pollutants in the cold start phase.

Accordingly, it is desirable to provide an improved heating element for heating exhaust gases to be treated and/or to tackle at least some of the problems associated with the prior art or, at least, to provide a commercially viable alternative thereto. It is particularly desirable to provide a heating unit that can be used with any conventional catalyst article, including ceramic honeycomb monoliths.

According to a first aspect the present invention relates to a method for the manufacture of an electrical heating unit for use in an exhaust gas system, the method comprising forming the electrical heating unit as a single piece by additive layer manufacturing, wherein the electrical heating unit comprises:
a tubular body comprising a wall for, in use, conducting a flow of an exhaust gas to be heated;
a first electrode extending through a hole in the wall of the tubular body without contacting the wall of the tubular body;
a second electrode in contact with the wall of the tubular body; and
a resistive heating element arranged within the tubular body extending from the first electrode to the wall of the tubular body to, in use, heat the flow of an exhaust gas,
wherein the electrical heating unit is formed from a metal having a melting point of at least 1000°C.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

An exhaust gas system is a system intended for the handling and treatment of an exhaust gas. In particular, an exhaust gas system provides a gas containing one or more species that need to be decomposed or converted before the gas is released to the atmosphere (such as CO, hydrocarbons (HC or total Hydrocarbons (THC)) or NOx). The subsequent discussion focusses on the exhaust gases from a combustion engine, preferably a gasoline or diesel engine. However, it should be appreciated that the electrical heating unit may have application in treating exhaust gases from other sources.

The invention provides an electrical heating unit for use in an exhaust gas system. That is, there is provided a heating unit which produces a heating effect based on supplied electrical voltage and which can use this to heat exhaust gases in the system. In particular, there is provided a discrete heating unit which heats an exhaust gas passing through the heating unit and which thereby helps to raise the temperature of the exhaust gas to a treatment temperature of a subsequent catalyst article.

The method comprises forming the electrical heating unit as a single piece by additive layer manufacturing (ALM). ALM is another name for 3D printing, or rapid prototyping. Additive layer manufacturing (ALM) is the opposite of subtractive manufacturing, in which material is removed to reach the desired shape. In ALM, 3D parts are built up in successive layers of material under computer control. Additive layer manufacturing sees products created layer-by-layer from a digital model. This is different from traditional manufacturing processes, which involve subtracting material, such as the machining of metal parts.

Types of additive manufacturing techniques include stereolithography for polymers, and selective laser sintering, which can use polymers such as nylon, or additive layer manufacturing metals including steel, titanium and other alloys.

The use of additive layer manufacture (ALM) allows the production of new structures, new compositions, new pathways, more efficient use of materials, more tuneable resistance and heat transfer properties. In particular, the use of ALM allows for more efficient use of enabling the reduced use of materials whilst maintaining heating performance. It is considered that there are advantages to using mixed alloys within the unit that cannot be realised in a foil or wire process.

The electrical heating unit comprises a tubular body comprising a wall for, in use, conducting a flow of an exhaust gas to be heated. In use the tubular body will be connected, such as by welding, to first tube for providing the exhaust gas and a second tube containing a catalyst article for treating the exhaust gas. The tubular body of the electrical heating unit will typically have a circular cross-section having a diameter of from 20 to 100mm, preferably from 4 to 8cm. The length of the tubular body in the direction of gas flow may be any suitable length to accommodate the resistive heating element, but is typically 10 to 50mm, such as 15 to 25mm.

The electrical heating unit comprises a first electrode extending through a hole in the wall of the tubular body without contacting the wall of the tubular body. This first electrode may be formed in connection with the wall of the tubular body for support, held in place by temporary bridging material. However, such bridging material needs to be removed before use to prevent electrical shorts. That is, preferably the step of forming the electrical heating unit as a single piece by additive layer manufacturing includes the removal of bridging material between the first and second electrodes as formed.

The electrical heating unit comprises a second electrode in contact with the wall of the tubular body. The second electrode is material extending outwards of the tubular body and is preferably arranged coaxially around the first electrode without contacting the first electrode. This configuration permits a single electrical connection to the heater, allowing for a simplified system design.

Preferably the method further comprises providing an insulating sleeve between the first electrode and the second electrode. This provides additional rigidity to the heating unit while also preventing electrical shorts. This sleeve as ensures that the first electrode does not directly contact the tubular body
The electrical heating unit comprises a resistive heating element arranged within the tubular body extending from the first electrode to the wall of the tubular body to, in use, heat the flow of an exhaust gas. Thus, a circuit is formed between the first and second electrodes via the resistive heating element. A resistive heating element is a component which produces heat when subjected to an electric current. The first and second electrodes are preferably connected to a source of DC power to drive the resistive heating element. AC currents may be used instead, but DC are preferred due to the power sources available in automobile applications.

The electrical heating unit is formed from a metal having a melting point of at least 1000°C. Preferably the metal has a melting point of 1000-1500 °C, preferably 1300-1400°C. A number of materials are known to be suitable for use in manufacture by ALM and these can be selected based on their electrical, thermal and physical properties. In particular, the materials need to have a suitable resistance to produce heat, while not decomposing or degrading in the high temperature conditions experienced by such components in an exhaust gas system.

Preferably the metal is selected from the group consisting of an FeCr alloy, and NiCr alloy, stainless steel and Inconel. These are all suitable conductive materials which can be used for ALM. Of these, FeCr has been found to be particularly suitable given its advantageous properties.

The design and configuration of the resistive heating element is key to its performance in heating the gas. In view of the benefits of ALM a number of different configurations can be utilised that could not be achieved by any other manufacturing process.

Preferably the resistive heating element has a thickness in an axial direction of the tubular body of at least 5mm. The resistive element generally has a thickness in an axial direction of the tubular body of from 5 to 25mm, preferably 7 to 15mm and most preferably about 10mm.

Preferably the resistive heating element is in the form of a substantially planar continuous strip having a length greater than a diameter of the tubular body. That is, the resistive heating element should snake back and forth at least to some extent across the lumen of the tube. The resistive heating element does not simply short directly between the first and second electrodes since it must be suitable for heating the exhaust gas, but the longer the length of the resistive heating element the greater the heating effect that can be achieved. Preferably the resistive heating element has a tortuous path from the first electrode to the second electrode across the tubular body.

Preferably the resistive heating element is in the form of a pair of spirals that meet near a centre of the tubular body, a first spiral extending from the first electrode and a second spiral extending from the wall of the tubular body. Preferably each spiral completes at least 1 revolution, preferably 2-10.

Preferably the resistive heating element has a width in a plane perpendicular to an axial direction of the tubular body of at least 5mm. Preferably the width is substantially constant, so this is a constant width value. Preferably the width in a plane perpendicular to an axial direction of the tubular body is from 5-20mm, preferably 10-15mm.

Preferably the resistive heating element occupies at least 25% of a cross-sectional area of the tube in a plane perpendicular to an axial direction of the tubular body. More preferably the resistive heating element occupies 25 to 75%, more preferably 40 to 60% of a cross-sectional area of the tube in a plane perpendicular to an axial direction of the tubular body. By referring to the element occupying the tube it refers to the bounds of the element compared to the spaces between the bounds of the element and it considers the element to be solid, whereas preferably it is actually porous to allow gases to flow within the element itself.

Preferably the resistive heating element contacts at least 5% of a circumference of the wall of the tubular body. Preferably the resistive heating element contacts 5 to 50, more preferably 20 to 30% of a circumference of the wall of the tubular body. The more that it contacts the greater the rigidity of the resistive heating element which helps to resist breakages. In addition, the more contact with the wall of the tubular body, the greater the number of paths for current to reach the second electrode.

Preferably the resistive heating element has a repeated lattice structure providing a plurality of through-channels through the resistive heating element. By providing these through-channels it increases the effective heating which can be provided by the increased surface area while reducing the material required. It can also promote the rigidity of the structure. Preferably the through channels are uniform and repeated, such as providing a regular honeycomb structure.

Preferably the repeated lattice structure further provides a plurality of through-channels orthogonal to an axial direction of the tubular body. For example, the lattice may have a node and beam construction. This sort of 3D structure of pores will further increase the surface area and heating effect, while reducing the material required. It is also considered that a static mixing effect can be achieved to improve the heat transfer within the gas being heated.

Preferably the through-channels provide a porosity within the resistive heating member of at least 25%, preferably from 25 to 90%, preferably 35 to 75%.

Preferably the method further comprises coating the resistive heating element with a catalyst composition, preferably a catalyst composition comprising one or more platinum group metals. Such catalytic compositions are well known in the art of exhaust gas treatment systems.

According to a further aspect there is provided an electrical heating unit obtainable by the method described herein. In view of the constraints of ALM processing it is possible to determine whether an electrical heating unit has been produced by ALM. In particular, all of the components are provided as a single piece construction with no fixings required and without any breaks or joins.

According to a further aspect there is provided an electrical heating unit for use in an exhaust gas system, the electrical heating unit comprising:
a tubular body comprising a wall for, in use, conducting a flow of an exhaust gas to be heated;
a first electrode extending through a hole in the wall of the tubular body without contacting the wall of the tubular body;
a second electrode in contact with the wall of the tubular body; and
a resistive heating element arranged within the tubular body extending from the first electrode to the wall of the tubular body to, in use, heat the flow of an exhaust gas, and wherein the resistive heating element has a repeated lattice structure providing a plurality of through-channels through the resistive heating element,
wherein the electrical heating unit is formed from a metal having a melting point of at least 1000°C.

All features disclosed in relation to the method above apply equally to the electrical heating unit as described herein. As will be appreciated the repeated lattice structure can only be achieved by ALM.

According to a further aspect there is provided an exhaust gas system comprising the electrical heating unit as described herein and a downstream catalyst article. Suitable catalytic articles will vary depending on the exhaust gas to be treated and are well known in the art. Any suitable catalyst article can be employed, but typically one will be selected suitable for treating one or more of CO, HC, THC and NOx.

The invention will now be described further with reference to the following figures in which:
Figure 1 shows a cross-section of an exhaust gas treatment system comprising the electrical heating unit of the invention.

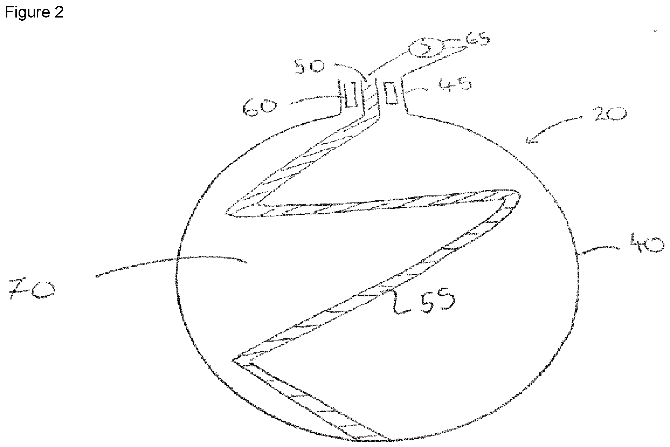

Figure 2 shows an end-section through an electrical heating unit of the invention.
Figures 3A-3D show different configurations of the electrical heating unit of the invention.

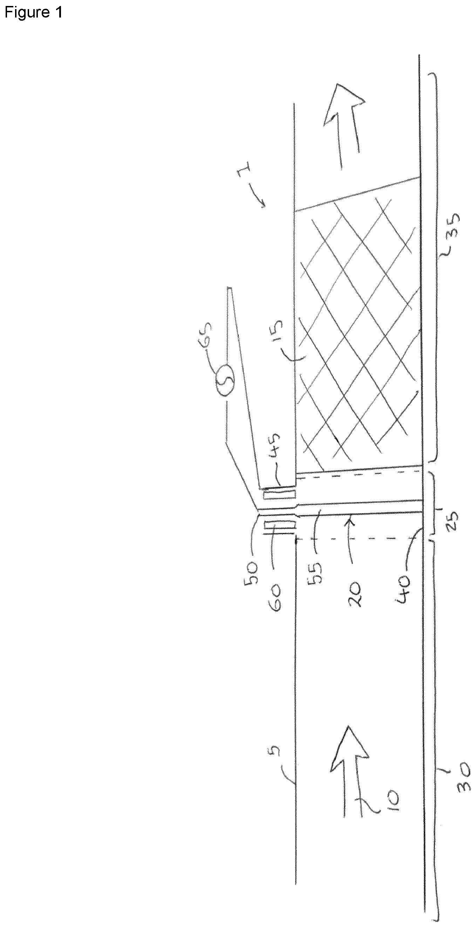

Figure 1 shows an exhaust gas treatment system 1. The exhaust gas treatment system 1 comprises a duct 5 through which, in use, an exhaust gas 10 to be treated is flowed. The duct 5 includes a catalyst article 15 for treating the exhaust gas 10.

The catalyst article 15 is typically a flow-through monolith comprising a catalyst washcoat provided on a porous honeycomb body. A catalyst article 15 typically has an optimum operating temperature and, in the context of exhaust gases from a gasoline or diesel engine, this will generally be at temperatures in excess of 200°C.

Upstream of the catalyst article 15 there is provided a heating component 20. This is provided as a section 25 of the duct 5, typically welded to an inlet duct portion 30 and a catalyst-containing duct portion 35.

The section 25 comprises a tubular body 40 directly connected to a return electrode 45. The tubular body 40 is also connected to a supply electrode 50 via a resistive heating element 55. The return electrode 45 has a tubular form and is provided coaxially around the supply electrode 50. The return electrode 45 is spaced from the supply electrode 50 by an insulating ring 60 to prevent short circuits. The return electrode 45 and the supply electrode 50 are connected to an DC power source 65.

The resistive heating element 55 is provided across the lumen 70 of the duct 5 to heat the exhaust gas 10. Advantageously, therefore, it takes a long path crossing between the supply electrode 50 and the tubular body 40. This extends the surface area of the resistive heating element 55, increasing the amount of heating that can be provided to the gas. A preferred 2D design is a pair of spirals meeting in the middle of the lumen 70. More complex 3D designs, such as stacked spirals can also be envisioned to extend the length of the resistive heating element 55. It is important, nonetheless that the rigidity of the resistive heating element 55 is maintained.

In use, the DC power source 65 provides a voltage across the supply electrode 50 and the return electrode 45, causing the resistive heating element 55 to heat up. The heating effect heats the exhaust gas 10 to an operating temperature of the catalyst article 15, such as in excess of 200°C. This causes the temperature of the catalyst article 15 to quickly reach a desired operating temperature and for the catalyst washcoat on the catalyst article 15 to catalyst the decomposition of species in the exhaust gas 15.

The section 25 is formed by additive layer manufacture (ALM). This means that the entirety of the tubular body 40, the supply and return electrodes 45, 50 and the resistive heating element 55 are formed of a single material, such as FeCr-alloy and in a single step. It may be necessary to construct bridging support components, such as between the supply and return electrodes 45, 50, but these are removed before use.

Advantageously, the resistive heating element 55 can itself have a porous structure, preferably a regular repeating matrix. Such a matrix permits the exhaust gas 10 to flow through the resistive heating element 55 as well as within the lumen 70 which is not occupied by the resistive element 55. This increases the efficiency and rate of heat transfer that can be achieved. Such an expanded lattice or matrix can be readily achieved by ALM without compromising on the structural integrity of the resistive heating element 55.

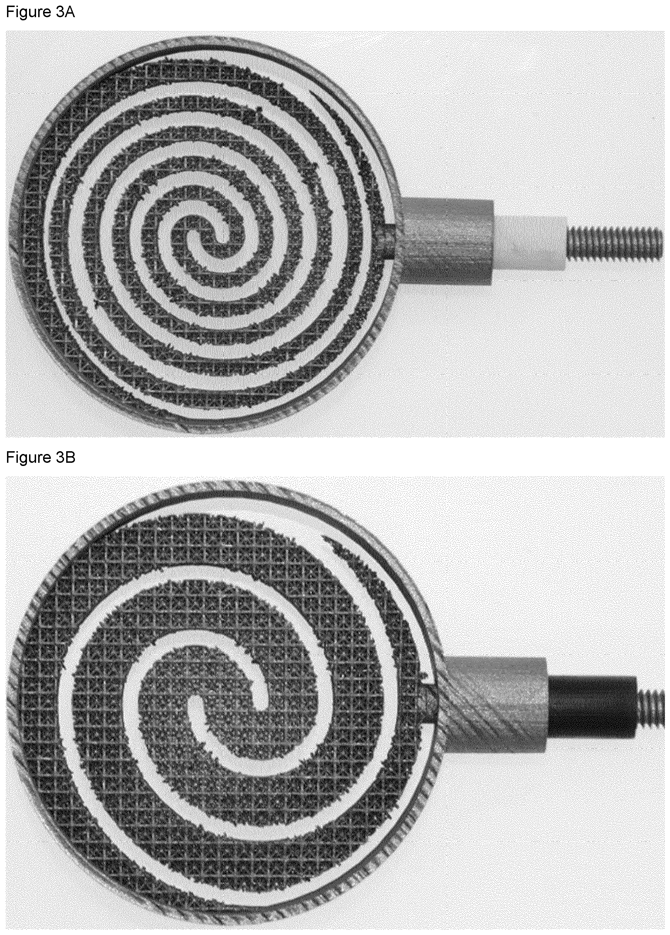

Figures 3A-3D show different configurations of the resistive heating element 55. In particular:
Figure 3A shows a resistive heating element 55 formed by a pair of spirals that meet near a centre of the lumen 70 of the tubular body 40, a first spiral extending from the supply electrode 50 and a second spiral extending from the wall of the tubular body 40. The resistive heating element 55 has a very fine expanded structure providing a plurality of regular through-channels parallel to and orthogonal to the axis of the tubular body 40. In order to increase the rigidity of the resistive heating element 55 it is connected to around 40% of the tubular wall 40.

Figure 3B shows a resistive heating element 55 formed by a pair of spirals that meet near a centre of the lumen 70 of the tubular body 40, a first spiral extending from the supply electrode 50 and a second spiral extending from the wall of the tubular body 40. Compared to Figure 3A, the resistive heating element 55 occludes a greater percentage of the lumen of the tubular body 40. The resistive heating element 55 has a very fine expanded structure providing a plurality of regular through-channels parallel to and orthogonal to the axis of the tubular body 40 (i.e. into and in the plane of the figure). In order to increase the rigidity of the resistive heating element 55 it is connected to around 40% of the tubular wall 40.

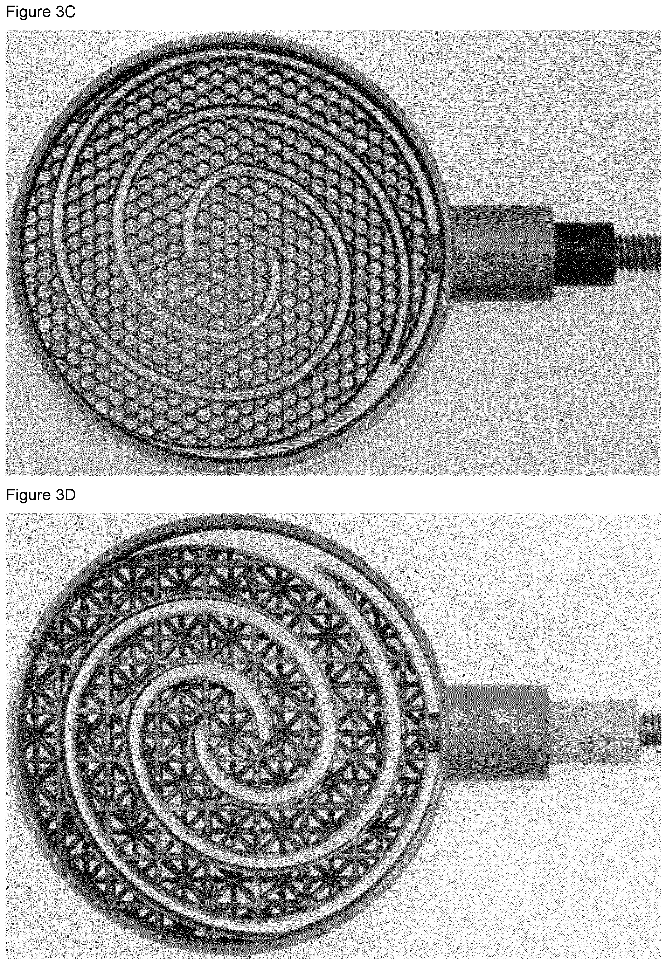

Figure 3C shows a resistive heating element 55 formed by a pair of spirals that meet near a centre of the lumen 70 of the tubular body 40, a first spiral extending from the supply electrode 50 and a second spiral extending from the wall of the tubular body 40. Compared to Figures 3A and 3B, the resistive heating element 55 has a coarser expanded structure providing a plurality of regular through-channels only parallel to the axis of the tubular body 40. In order to increase the rigidity of the resistive heating element 55 it is connected to around 40% of the tubular wall 40.

Figure 3D shows a resistive heating element 55 formed by a pair of spirals that meet near a centre of the lumen 70 of the tubular body 40, a first spiral extending from the supply electrode 50 and a second spiral extending from the wall of the tubular body 40. Compared to Figures 3A and 3B, the resistive heating element 55 has a coarser expanded structure providing a plurality of regular through-channels parallel to and orthogonal to the axis of the tubular body 40. In order to increase the rigidity of the resistive heating element 55 it is connected to around 40% of the tubular wall 40.

The invention will now be described further in relation to the following non-limiting examples:
Heaters were printed using a laser sintering additive process having an FeCrAlloy 1.4767 powder feed. The electrode patterns are shown in Figures 3A-3D. Some of the Heaters were designed with structure that could not be made with wire fed or foil processes. Heaters have been tested in air flow at low and high power. High power tests have had hydrocarbons burnt upstream of the heater to generate temperatures akin to those experienced in real exhaust systems. Heaters have shown a constant electrical resistance across a range of powers tested. Heaters have shown a proportional relationship between power in and temperature out, so a heat transfer coefficient may be calculated.

A high power supply was purchased for Engine Testing work and fitted with safety devices for shutdown when test cell / DPG rig is open. A steady state test has been developed and was used. There are limitations to the steady state test; however, the test represents a heated gas feed which has a composition and transient elements of automotive exhaust. The DPG test has a high airflow compared to the size of the part, and has a fast heat ramp from ambient to 250°C. Electrical power can be activated in a consistent way test-to-test. High Power testing has been completed on the reference EHC from Vitesco-Emitec and on all of the designs of prototype heaters made using ALM by Sandvik.

Resistive heating of a gas flow for an exhaust application shows that heating depends on the power applied. Thus, a heat transfer coefficient can be applied to each heater design. For this application a low heat transfer coefficient is good. Three of the ALM parts tested showed a lower heat transfer coefficient than the reference resistive heater.

The ALM heaters had lower resistance than the reference part. Low resistance heaters have a robustness challenge to cope with high electrical current. High current is required to deliver the power required for the desired temperature for heat up function. High current caused some parts to fail; whether through a melting event, or alternatively through a fracture event.

Therefore, it is required that the designs have a suitable combination of heat transfer coefficient and resistance.

| **Design** | **Heat transfer coefficient** | **Comment** |
|---|---|---|
| Reference | 1100 Wm⁻²K⁻¹ | Emitec wrapped foils |
| 1* | 610 Wm⁻² K⁻¹ | Wide spirals, honeycomb through-channels |
| 2** | 12,240 Wm⁻² K⁻¹ | Thin multiple spirals - mechanical failure during test |
| 3* | 790 Wm⁻² K⁻¹ | Medium spiral, fine lattice (very fine expanded structure) |
| 4* | 760 Wm⁻² K⁻¹ | Medium spiral, large lattice |
| 5 | 8,180 Wm⁻² K⁻¹ | Large lattice mesh (not a single discharge route) |
| 6 | 7,480 Wm⁻² K⁻¹ | Fine lattice mesh (not a single discharge route) |

Examples 1, 3 and 4 demonstrated desirable properties for the application. Example 2 suffered a failure suggesting that the specific configuration lacked sufficient rigidity.

Although preferred embodiments of the invention have been described herein in detail, it will be understood by those skilled in the art that variations may be made thereto without departing from the scope of the invention or of the appended claims.

## Claims

1. A method for the manufacture of an electrical heating unit for use in an exhaust gas system, the method comprising forming the electrical heating unit as a single piece by additive layer manufacturing, wherein the electrical heating unit comprises:
a tubular body comprising a wall for, in use, conducting a flow of an exhaust gas to be heated;
a first electrode extending through a hole in the wall of the tubular body without contacting the wall of the tubular body;
a second electrode in contact with the wall of the tubular body; and
a resistive heating element arranged within the tubular body extending from the first electrode to the wall of the tubular body to, in use, heat the flow of an exhaust gas,
wherein the electrical heating unit is formed from a metal having a melting point of at least 1000°C.

2. The method according to claim 1, wherein the metal is selected from the group consisting of an FeCr alloy, an NiCr alloy, stainless steel and Inconel.

3. The method according to any preceding claim, wherein the second electrode is arranged coaxially around the first electrode without contacting the first electrode, preferably wherein the method further comprises providing an insulating sleeve between the first electrode and the second electrode.

4. The method according to any preceding claim, wherein the resistive heating element is in the form of a substantially planar continuous strip having a length greater than a diameter of the tubular body.

5. The method according to claim 4, wherein the resistive heating element is in the form of a pair of spirals that meet near a centre of the tubular body, a first spiral extending from the first electrode and a second spiral extending from the wall of the tubular body.

6. The method according to any preceding claim, wherein the resistive heating element contacts at least 5% of a circumference of the wall of the tubular body.

7. The method according to any preceding claim, wherein the resistive heating element has a thickness in an axial direction of the tubular body of at least 5mm.

8. The method according to any preceding claim, wherein the resistive heating element has a width in a plane perpendicular to an axial direction of the tubular body of at least 5mm.

9. The method according to any preceding claim, wherein the resistive heating element occupies at least 25% of a cross-sectional area of the tube in a plane perpendicular to an axial direction of the tubular body.

10. The method according to any preceding claim, wherein the resistive heating element has a repeated lattice structure providing a plurality of through-channels through the resistive heating element, preferably wherein the repeated lattice structure further provides a plurality of through-channels orthogonal to an axial direction of the tubular body.

11. The method according to any preceding claim, wherein the step of forming the electrical heating unit as a single piece by additive layer manufacturing includes the removal of bridging material between the first and second electrodes as formed.

12. The method according to any preceding claim, wherein the method further comprises coating the resistive heating element with a catalyst composition, preferably a catalyst composition comprising one or more platinum group metals.

13. An electrical heating unit obtainable by the method of any preceding claim.

14. An electrical heating unit for use in an exhaust gas system, the electrical heating unit comprising:
a tubular body comprising a wall for, in use, conducting a flow of an exhaust gas to be heated;
a first electrode extending through a hole in the wall of the tubular body without contacting the wall of the tubular body;
a second electrode in contact with the wall of the tubular body; and
a resistive heating element arranged within the tubular body extending from the first electrode to the wall of the tubular body to, in use, heat the flow of an exhaust gas, and wherein the resistive heating element has a repeated lattice structure providing a plurality of through-channels through the resistive heating element,
wherein the electrical heating unit is formed from a metal having a melting point of at least 1000°C.

15. An exhaust gas system comprising the electrical heating unit according to claim 13 or claim 14 and a downstream catalyst article.
